(19) Europäisches Patentamt
European Patent Office
Office européen des brevets

(11) **EP 1 442 284 B1**

(12) **EUROPÄISCHE PATENTSCHRIFT**

(45) Veröffentlichungstag und Bekanntmachung des Hinweises auf die Patenterteilung:
**12.03.2008   Patentblatt 2008/11**

(21) Anmeldenummer: **02802305.9**

(22) Anmeldetag: **24.10.2002**

(51) Int Cl.:
**_G01N 21/65_** _(2006.01)_

(86) Internationale Anmeldenummer:
**PCT/EP2002/012060**

(87) Internationale Veröffentlichungsnummer:
**WO 2003/038415 (08.05.2003 Gazette 2003/19)**

(54) **BESTIMMUNG DES REAKTIONSFORTSCHRITTS VON PFROPFPOLYMERISATIONSREAKTIONEN**

DETERMINATION OF THE REACTION ADVANCEMENT OF GRAFT POLYMERIZATION REACTIONS

DETERMINATION DE L'AVANCEMENT DE REACTIONS DE POLYMERISATION PAR GREFFAGE

(84) Benannte Vertragsstaaten:
**AT BE BG CH CY CZ DE DK EE ES FI FR GB GR IE IT LI LU MC NL PT SE SK TR**

(30) Priorität: **30.10.2001   DE 10153536**
**04.02.2002   DE 10204392**

(43) Veröffentlichungstag der Anmeldung:
**04.08.2004   Patentblatt 2004/32**

(73) Patentinhaber: **LANXESS Deutschland GmbH**
**51369 Leverkusen (DE)**

(72) Erfinder:
• **WOLF, Udo**
**47906 Kempen (DE)**
• **BORN, Ralf-Jürgen**
**55218 Ingelheim (DE)**

• **BUCHHOLZ, Vera**
**50823 Köln (DE)**
• **EICHENAUER, Herbert**
**41539 Dormagen (DE)**
• **WENZ, Eckhard**
**50679 Köln (DE)**
• **BERGMEIER, Wilhelm**
**40667 Meerbusch (DE)**
• **BODEN, Christof**
**51381 Leverkusen (DE)**

(74) Vertreter: **Gille Hrabal Struck Neidlein Prop Roos**
**Postfach 18 04 09**
**40571 Düsseldorf (DE)**

(56) Entgegenhaltungen:
WO-A-01/09201          WO-A-98/08066
US-A- 4 125 534         US-A- 4 661 383
US-A- 6 072 576

**EP 1 442 284 B1**

## Beschreibung

Gegenstand der Erfindung ist ein Verfahren zur Bestimmung des Reaktionsfortschritts von Pfropfpolymerisationsreaktionen.

Prinzipiell ist die nahe Infrarot-Fourier-Transform-Raman-Spektroskopie seit ihrer kommerziellen Verfügbarkeit im Jahre 1989 bekannt und hat sich zu einer leistungsfähigen und routinemäßig angewendeten spektroskopischen Methode entwickelt (J. Sawatzki, CLB Chemie in Labor und Biotechnik, 50. Jahrgang. Heft 9/1999). Auch M. van den Brink, Journal of Applied Polymer Science, Vol. 79, 426-436 (2001) berichtet über die Messung der teilweisen Umwandlung einer Copolymerisationslösung von Styrol und Butylacrylat unter Verwendung der On-line-Raman-Spektroskopie. Es wird jedoch festgehalten, dass die Berechnung von einzelnen Monomerkonzentrationen auf der Basis von individuellen Vinylpeaks nicht sehr geeignet ist, da sich diese Banden im Raman-Spektrum überlappen.

Das US-Patent 4,125,534 offenbart bestimmte Diacetylen-Monomere, welche im festen Zustand durch Bestrahlung via 1,4-Additionsreaktion polymerisiert werden. Zum experimentellen Nachweis der Polymerisationsreaktion wird die Anwendung der Raman-Spektroskopie erwähnt.

WO 98/08066 offenbart die quantitative Überwachung von Polyester-Bildungsreaktionen mittels Raman-Spektroskopie.

WO 01/09201 offenbart ein Verfahren zur Olefin-Polymerisation in einem Aufschlämmungsreaktor, bei dem insbesondere die Wasserstoffkonzentration mittels Raman-Spektroskopie ermittelt wird.

US-Patent 6,072,576 offenbart die Ausgestaltung einer Produktionsanlage zur Herstellung von Halogenbutylkautschuk, welche mit einem Online-Überwachungsverfahren arbeitet, das auf die Anwendung der NIR-Spektroskopie beruht.

US-Patent 4,661,383 offenbart eine Verfahren zur Pfropfung von dotiertem Polyacetylen/Polytetrafluoroethylene (PTFE). Die Pfropfung dient der Oberflächenmodifikation des PTFE. Unter anderem wird dabei die Raman-Spektroskopie zum analytischen Nachweis der Oberflächenmodifikationen angewendet.

WO 00/49395 betrifft ein Verfahren zur Herstellung von Latex durch Emulsions-(co)polymerisation mindestens einer Art von ethylenisch ungesättigten Monomeren, dadurch gekennzeichnet, dass das Verfahren mittels kontinuierlicher Vor-Ort-Kontrolle der (Co)polymerisation durchgeführt wird, die folgenden Schritte umfasst:

(i) man sendet in die Emulsion eine einfallende Lichtstrahlung, die innerhalb des Spektralbereichs zwischen 200 nm und 1.400 nm, vorzugsweise zwischen 700 nm und 1.400 nm, liegt

(ii) das vom Reaktionsmedium gestreute Licht wird erfasst und an ein Raman-Spektrometer geleitet

(iii) man bestimmt das Raman-Spektrum, das die Energie des gestreuten Lichts in Abhängigkeit von der Wellenlängenverschiebung gegenüber der einfallenden Lichtstrahlung wiedergibt

(iv) man berechnet:

a) entweder die Intensitäten (Flächen oder Höhen) spezifischer Spektrallinien des (der) freien, nicht (co)polymerisierten Monomers(e) im Reaktionsgemisch und des erhaltenen Polymers

b) oder die Konzentrationen des(der) freien, nicht (co)polymerisierten Monomers(e) im Reaktionsmedium und des erhaltenen Polymers aufgrund des Raman-Spektrums mit Hilfe quantitativer Spektralanalysemethoden, vorzugsweise mit Hilfe von multivariaten chemometrischen Methoden

(v) man berechnet die Prozessdaten anhand der Konzentrationen des(der) freien Monomers(e) und des erhaltenen Polymers oder der Intensitäten (Flächen oder Höhen) der spezifischen Spektrallinien des(der) freien Monomers(e) im Reaktionsmedium und des erhaltenen Polymers,

(vi) man vergleicht diese Prozessdaten mit den spezifischen Referenzdaten des Verfahrens zur Herstellung von Latex mit den vorgegebenen Eigenschaften

(vii) und regelt die Reaktionsparameter, wie Temperatur, Druck, Rühren des Gemischs und Monomerenzufuhr so, dass die Abweichung zwischen den Online gemessenen Prozessdaten und den Referenzprozessdaten minimiert wird.

Die in der WO 00/49395 gemachten Angaben zur direkten Intensitätsmessung der Raman-Linien weisen den gravierenden Nachteil auf, dass diese nicht exakt einem definierten (copolymerisierten) Monomeren zugeordnet werden können. Auch sind die genannten multivariaten chemometrischen Methoden oft für eine technische Umsetzung nicht geeignet, da mit ihnen ein sehr hoher Kalibrieraufwand verbunden ist.

Demgegenüber besteht die Aufgabe der vorliegenden Erfindung in der Bereitstellung eines verbesserten Verfahrens zur Bestimmung des Reaktionsfortschritts von Pfropfpolymerisationsreaktionen.

Die Lösung der vorgenannten Aufgabe besteht in einem Verfahren zur Bestimmung des Reaktionsfortschritts von Pfropfpolymerisationsreaktionen mittels Vor-Ort-Kontrolle der Reaktion durch Messung des Raman-Spektrums zu Beginn und in zeitlichen Abständen im Verlauf der Reaktion, dadurch gekennzeichnet, dass man vor Beginn der Reaktion das Raman-Spektrum eines oder mehrerer der zu analysierenden Monomeren und/oder Polymeren sowie mindestens eines inneren Standards im Wellenzahlbereich von 100 bis 4000 cm$^{-1}$ aufnimmt, Reaktionspartner zur Durchführung der Pfropfpolymerisation kontinuierlich und/oder diskontinuierlich zugibt und in zeitlichen Abständen im Verlauf der Reaktion weitere Raman-Spektren im Wellenzahlbereich von 100 bis 4000 cm$^{-1}$ aufnimmt und die Konzentrationsänderung der Monomeren und Polymeren durch Vergleich der Spektren der zu analysierenden Monomeren oder Polymeren relativ zum inneren Standard berechnet.

Die Mehrzahl der heute kommerziell verfügbaren Raman-Spektrometersysteme kann in zwei Klassen unterschieden werden:

FT-Raman-Spektrometer:

Die Anregung des Raman-Spektrums geschieht mit Hilfe des Nd:YAG-Lasers ($\lambda$ = 1,06 $\mu$m). Zur Detektion der Raman-Strahlung wird ein Interferometer mit Nah-Infrarot-Optik verwendet. Die nicht Wellenlängen-verschobene Raleigh-Strahlung wird mit Hilfe eines Notch-Filters unterdrückt.

Da die Intensität der Raman-Strahlung proportional zu 1/$\lambda^4$ ist, ist die relativ langwellige Anregung mit Hilfe des Nd:YAG-Lasers zunächst ungünstig. Da jedoch zum einen Nd:YAG-Laser mit relativ hoher Leistung verfügbar sind (typ.einige Watt) und darüber hinaus die sehr häufig bei Anregung im UV/VIS-Bereich störende Fluoreszenz nicht auftritt, können Raman-Spektren von organischen Substanzen in der Regel problemlos aufgenommen werden.

Dispersive Raman-Spektrometer:

Die Anregung der Raman-Strahlung ist mit verschiedenen Lasern möglich. Üblich ist die Verwendung von He:Ne-Lasern ($\lambda$ = 632 nm) sowie Halbleiterlasern (beispielsweise $\lambda$ = 785 nm).

Die Spektrenaufschlüsselung und Detektion erfolgt mit Hilfe eines Gitters und (thermoelektrisch gekühlten) CCD-Detektors. Die Raleigh-Streustrahlung wird mit Hilfe eines Notch-Filters geblockt. Derartige Systeme können besonders einfach im Multiplexbetrieb arbeiten, da mehrere Spektren gleichzeitig auf den CCD-Flächendetektor abgebildet und nacheinander ausgelesen werden können.

Bei kurzwelliger Anregung wird häufig störende Fluoreszenz beobachtet. Die Fluoreszenz kann das Raman-Spektrum völlig überdecken. Die absolute Höhe eines Raman-Emissionspeaks ist nicht reproduzierbar. Erfindungsgemäß werden Raman-Spektren daher immer mit inneren Standards ausgewertet.

Die spektrale Empfindlichkeit unterschiedlicher Raman-Spektrometer ist nicht gleich. Kalibrierungen sind daher nur eingeschränkt auf verschiedene Spektrometer übertragbar. Es sollten die Kalibrierfaktoren bei Übertragung auf ein anderes Spektrometer überprüft beziehungsweise justiert werden.

Weitere Einflüsse auf die spektrale Empfindlichkeit sind durch das zu analysierende Medium selbst möglich, da dieses Strahlung absorbieren kann. Das Stokes-verschobene Raman-Spektrum (Fundamentalschwingungsbereich) befindet sich im Bereich $\nu_0$ bis $\nu_0$-4000 cm$^{-1}$, das heißt im Falle der Anregung mit den Nd:YAG-Laser im Bereich von 9400-5400 cm$^{-1}$. In diesem Spektralbereich besitzt Wasser eine nicht vernachlässigbare Absorption. Bei der Emulsionspolymerisation kann die effektive Weglänge der Raman-Strahlung in der Probe von den (variablen) Streueigenschaften der Emulsion abhängen. Damit hängen auch die relativen Intensitätsverhältnisse des Raman-Spektrums von den Emulsionseigenschaften ab. Dies gilt besonders für den Bereich $\nu$>2000 cm$^{-1}$ des Raman-Spektrums bei Anregung mit dem Nd:YAG-Laser.

Im Falle der Anregung mit dem 785 nm Halbleiterlaser befindet sich die Raman-Strahlung (Fundamentalschwingungen) im Bereich von 12700-8700 cm$^{-1}$. In diesem Spektralbereich ist die Eigenabsorption des zu analysierenden Mediums (beispielsweise Wasser) in der Regel deutlich schwächer. Entsprechend ist der Einfluss der Emulsionseigenschaften auf das Raman-Spektrum geringer.

Die zur Anregung des Raman-Spektrums verwendete Laserstrahlung kann polarisiert oder nicht polarisiert sein. Detektionsseitig kann optional ein Polarisator verwendet werden, um gegebenenfalls unerwünschte Polarisationsrichtungen auszuschließen. Zwischen anregendem Laserstrahl und Detektionsoptik kann ein Winkel zwischen 0 und 360°, bevorzugt 90 bis 180° bestehen.

Die Aufnahme der Raman-Spektren kann bevorzugt mittels Lichtleiterkopplung erfolgen. Durch Verwendung einer Sondenoptik (beispielsweise Raman-Messkopf, Firma Bruker, Karlsruhe) können die Raman-Spektren eine Reaktorinhaltes durch ein am Reaktor angebrachtes Schauglas hindurch erfolgen. Darüber hinaus sind auch Eintauchsonden verfügbar, die in direktem Kontakt mit dem zu analysierenden Produkt stehen und die über Lichtleiter mit einem Raman-Spektrometer verbunden sind.

Die Aufnahme der Daten kann dabei offline, online oder inline durchgeführt werden. Im Rahmen der vorliegenden Erfindung bedeutet dabei offline, dass ein Aliquot der Reaktionsmischung entnommen und räumlich getrennt vermessen wird. Online bezeichnet eine Vorgehensweise, bei der ein Teil der Reaktionsmischung beispielsweise durch eine Seitenschleife (Loop) aus dem Reaktionsgefäß abgezweigt, vermessen und anschließend der Reaktionsmischung wieder zugefügt wird. Inline bedeutet, dass die Messung direkt im Reaktionsgefäß stattfindet. Im Rahmen der vorliegenden Erfindung erfolgt die Datenaufnahme vorzugsweise online oder inline, besonders bevorzugt inline.

Im einfachsten Falle einer absatzweisen Emulsionspolymerisation wird typischerweise ein in Wasser schwerlösliches Monomer, beispielsweise Styrol, in Wasser als Dispersionsmedium in Gegenwart eines Emulgators (beispielsweise einer Fettseife oder eine Alkansulfonats mit mindestens 12 Kohlenstoffatomen in der Kette) und eines Radikalbildners (beispielsweise Kaliumperoxodisulfat) bei Temperaturen von 55 bis 85°C unter Rühren polymerisiert.

Man unterscheidet bereits in diesem einfachsten Falle:

a) Die Phase I der Latexteilchenbildung (Latexteilchennucleierung). Sie währt bis zur weitestgehenden Absorption des Emulgators an die wachsende Grenzfläche Latexteilchen/Wasser beziehungsweise Monomerteilchen/Wasser.

b) Die Phase II des Teilchenwachstums. Neubildungen von Latexteilchen finden dann kaum mehr statt; neben Monomerentröpfchen liegen Monomeren - gequollene Latexteilchen vor, in denen die Polymerisationsreaktion stattfindet. Nach Verschwinden der Monomerentröpfchen findet in:

c) Phase III das Auspolymerisieren des in die Latexteilchen eingequollenen Monomeren statt. Während in Phase I und II die Latexteilchen jeweils maximal mit Monomeren gequollen sind, vermindert sich in Phase III, ausgehend von der maximalen Quellung, die Monomerenkonzentration in den Latexteilchen stetig.

Die Kinetik der Emulsionspolymerisation, die bei in Wasser schwerlöslichen Monomeren fast ausschließlich in den Latexteilchen stattfindet, wird durch die Monomerenkonzentration und die Radikalkonzentration in den Latexteilchen sowie die Zahl der Latexteilchen pro Volumeneinheit Emulsion bestimmt. Die Geschwindigkeit des Kettenwachstums der Makromoleküle wird von der temperaturabhängigen spezifischen Propagationskonstante kp des jeweiligen Monomeren diktiert.

Grundsätzlich werden viele Emulsionspolymerisationen aus Gründen der Wärmezufuhr und aus Sicherheitserwägungen nicht absatzweise sondern halbkontinuierlich durchgeführt. Man dosiert die Monomeren so schnell nach, dass man die freiwerdende Polymerisationswärme bei gegebenen Kühlvorrichtungen gut abführen kann.

Meist wird dabei auch Phase I der Emulsionspolymerisation durch Vorlage eines Saatlatex bewusst umgangen (Monomeren-Zulaufverfahren mit vorgelegtem Saatlatex).

Bei der halbkontinuierlichen Saat-Zulauf-Emulsionspolymerisation mit Monomerenzulauf kann ein Zustand aus Phase III bei einem bestimmten Monomerenumsatz fixiert werden (starved polymerisation).

Genau hier kann eine Regelung des Monomerenzulaufs nach Maßgabe einer On-line Messung der Monomerenkonzentration ansetzen. Die Zugabegeschwindigkeit des Monomeren wird aufgrund der On-line gemessenen Monomerenkonzentration geregelt. Sinkt die Monomerenkonzentration, wird die Zulaufgeschwindigkeit erhöht, steigt sie an; wird der Monomerenzulauf gedrosselt. Auf diese Weise gelingt es, den stationären Umsatz in den Latexteilchen über einen weiten Zeitbereich der Emulsionspolymerisation auf einem gewünschten Niveau konstant zu halten.

Bei der Acrylnitril/Butadien-Copolymerisation beispielsweise können die relativen Mengenanteile der Monomere und die Copolymeranteile des entstandenen Copolymers online erfasst werden. bei Im Falle der Butadien-Emulsionspolymerisation kann beispielsweise nach dem Verschwinden der Monomertröpfchen das Butadien/Polybutadien-Mengenverhältnis sehr genau online bestimmt werden. Bei bekannter zudosierter Butadienmenge ist damit auch der Umsatz bekannt

Besonders bevorzugt kann das erfindungsgemäße Verfahren zur kontrollierten Herstellung von Pfropfpolymerisaten durch Pfropfung von Monomeren auf eine Pfropfgrundlage (PG) eingesetzt werden, wobei in einem Reaktor eine bekannte Menge Pfropfgrundlage $M_{PG}$, beispielsweise in Form einer Emulsion, vorgelegt wird, eine Pfropfung zum Zeitpunkt t=0 gestartet wird, in bekannter Weise durch kontinuierliche Zugabe und Polymerisation des oder der Monomeren durchgeführt wird und in kurzen zeitlichen Abständen die Raman-Spektren I(ν) bevorzugt im Bereich 4000 bis 100 cm$^{-1}$ (Stokes-Bereich), ansonsten im Bereich -4000 bis 4000 cm$^{-1}$ (Anti-Stokes- und Stokes-Bereich) aufgenommen werden.

Oftmals überlappen sich die Raman-Spektren der Einzelkomponenten. Übliche chemometrische Spektrenauswertmethoden, mit deren Hilfe überlagerte Strukturen für quantitative Konzentrationsbestimmungen zugänglich gemacht werden können, sind als Auswertemethoden kaum geeignet, da die Kalibrierung mit einem sehr hohen Aufwand für die Bereitstellung von Emulsionen mit definierten Konzentrationen und unter Variation aller Einzelkomponenten verbunden ist. Die erfindungsgemäße Spektrenauswertung erfolgt daher mit Hilfe eines automatisierten Spektrenauswerteprogramms.

Im Falle einer typischen Pfropfcopolymerisation von zwei Monomeren (MO1, MO2) auf eine Pfropfgrundlage (PG) werden zusätzlich zu diesen Ausgangskomponenten noch die Homopolymere von MO1 und MO2 (PO1, PO2) erfasst und für die Auswertung herangezogen.

Vorzugsweise werden aus den zuvor gemessenen und in digitalisierter Form in einer EDV-Einheit gespeicherten' Raman-Spektren $I_{PG}(\nu)$ der Pfropfgrundlage (PG), $I_{PO1}(\nu)$ und $I_{PO1}(\nu)$ der Homopolymeren PO1 und PO2, $I_{MO1}(\nu)$

und $I_{MO2}(\nu)$ der Monomere MO1 und MO2 und dem aktuellen Spektrum $I(\nu)$ des Reaktorinhaltes mit $\nu_{min}$=-4000 cm$^{-1}$ (Anti-Stokes-Bereich) und $\nu_{max}$=4000 cm$^{-1}$ (Stokes-Bereich), bevorzugt $\nu_{min}$=100 cm$^{-1}$ und $\nu_{max}$=4000 cm$^{-1}$, besonders bevorzugt $\nu_{min}$=500 cm$^{-1}$ und $\nu_{max}$=2500 cm$^{-1}$, ganz besonders bevorzugt $\nu_{min}$=750 cm$^{-1}$ und $\nu_{max}$=1800 cm$^{-1}$ in einem Kalibrierschritt zuvor die Faktoren $K_{PO1}$, $K_{PO2}$, $K_{MO1}$ und $K_{MO2}$ bestimmt, indem die Raman Spektren $I_K(\nu)$ von Mischungen mit bekannten Mengenanteilen aufgenommen werden und aus der Bedingung:

$$\sum_{\nu_{min}}^{\nu_{max}} \{I_K(\nu) - [f_{PG}* I_{PG}(\nu) + f_{PO1}* I_{PO1}(\nu) + f_{PO2}* I_{PO2}(\nu) + f_{MO1}* I_{MO1}(\nu) + f_{MO2}* I_{MO2}(\nu) + f_k]\}^2$$

$$= \text{Minimum}$$

die Faktoren $f_i$, errechnet werden, daraus die Quotienten

$$Q_{PO1} = f_{PO1}/f_{PG}$$

$$Q_{PO2} = f_{PO2}/f_{PG}$$

$$Q_{MO1} = f_{MO1}/f_{PG}$$

$$Q_{MO2} = f_{MO2}/f_{PG},$$

mit den bekannten Mengen M die Gewichtsteile W:

$$W_{PO1} = M_{PO1}/M_{PG}$$

$$W_{PO2} = M_{PO2}/M_{PG}$$

$$W_{MO1} = M_{MO1}/M_{PG}$$

$$W_{MO2} = M_{MO2}/M_{PG}$$

und aus folgenden Gleichungen, die jeweils anzuwenden sind für Raman-Spektren von Kalibrierproben, die einen hohen Anteil derjenigen Komponente aufweisen, dessen Kalibrierfaktor zu bestimmen ist:

$$K_{PO1} = W_{PO1}/Q_{PO1}$$

$$K_{PO2} = W_{PO2}/Q_{PO2}$$

$$K_{MO1} = W_{MO1}/Q_{MO1}$$

$$K_{MO2} = W_{MO2}/Q_{MO2}$$

die Kalibrierfaktoren K berechnet werden.

Kalibrierproben zur Bestimmung der Kalibrierfaktoren $K_{MO1}$ und $K_{MO1}$ können zum Beispiel hergestellt werden, indem Monomere $M_{O1}$ oder $M_{O2}$ in definierter Menge zu einem Polybutadien-Latex definierter Menge und definiertem Polybutadien-Gehalt zugegeben werden. Zur Bestimmung der Kalibrierfaktoren $K_{PO1}$ und $K_{PO1}$ können zum Beispiel Copolymer-Suspensionen mit variierenden, bekannten Copolymeranteilen verwendet werden.

Während der Pfropfpolymerisation werden aus dem aktuellen Spektrum I(ν) des Reaktorinhaltes und der Bedingung

$$\sum_{\nu_{min}}^{\nu_{max}} \{I(\nu) - [f_{PG}* I_{PG}(\nu) + f_{PO1}* I_{PO1}(\nu) + f_{PO2}* I_{PO2}(\nu) + f_{MO1}* I_{MO1}(\nu) + f_{MO2}* I_{MO2}(\nu) + f_k]\}^2$$

$$= Minimum$$

die Faktoren $f_i$, errechnet (gewichtete Subtraktion), wobei die Summation über alle Datenpunkte der in gleicher Form digitalisierten Spektren $I_i (\nu)$ erfolgt.

Daraus werden die Quotienten

$$Q_{PO1} = f_{PO1}/f_{PG}$$

$$Q_{PO2} = f_{PO2}/f_{PG}$$

$$Q_{MO1} = f_{MO1}/f_{PG}$$

$$Q_{MO2} = f_{MO2}/f_{PG}$$

und mit den Kalibrierfaktoren K die Mengenanteile W von:

Polymer1 zu Pfropfgrundlage : $W_{PO1} = K_{PO1}* Q_{PO1}$
Polymer2 zu Pfropfgrundlage : $W_{PO2} = K_{PO2}* Q_{PO2}$
Monomer1 zu Pfropfgrundlage : $W_{MO1} = K_{MO1}* Q_{MO1}$
Monomer2 zu Pfropfgrundlage : $W_{MO2} = K_{MO2}* Q_{ACN}$

berechnet und daraus nach:

$$M_{PO1} = W_{PO1} * M_{PG}$$

$$M_{PO2} = W_{PO2} * M_{PG}$$

$$M_{MO1} = W_{MO1} * M_{PG}$$

$$M_{MO2} = W_{MO2} * M_{PG}$$

die absoluten Mengen von Polymer1 $M_{PO1}$, Polymer2 $M_{PO2}$, Monomer1 $M_{MO1}$ und Monomere2 $M_{MO2}$ im Reaktor berechnet, diese mit den Soll-Konzentrationen nach einer Zeit $\Delta t$ nach Start der Polymerisation verglichen und durch Variation der Zugabemengen von Monomer1 und/oder Monomer2 oder durch Anheben oder Absenken der Polymerisationsraten die aktuellen Mengen an die jeweiligen Sollmengen für die Reaktion zum Zeitpunkt $t_0 + \Delta t$ herangeführt.

Pfropfpolymerisate im Sinne der vorliegenden Erfindung umfassen beispielsweise:

A.1     5 bis 95, vorzugsweise 30 bis 90 Gew.-%, wenigstens eines Vinylmonomeren auf

A.2     95 bis 5, vorzugsweise 70 bis 10 Gew.-% einer oder mehrerer Pfropfgrundlagen mit Glasübergangstemperaturen <10°C, vorzugsweise <0°C, besonders bevorzugt < -20°C.

Monomere A.1 sind vorzugsweise Gemische aus

A.1.1     50 bis 99 Gew.-Teilen Vinylaromaten und/oder kernsubstituierten Vinylaromaten (wie beispielsweise Styrol, $\alpha$-Methylstyrol, p-Methylstyrol, p-Chlorstyrol) und/oder Methacrylsäure-$(C_1-C_8)$-Alkylester (wie Methylmethacrylat, Ethylmethacrylat) und

A.1.2     1 bis 50 Gew.-Teilen Vinylcyanide (ungesättigte Nitrile wie Acrylnitril und Methacrylnitril) und/oder (Meth)Acrylsäure-$(C_1-C_8)$-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere A.1.1 sind ausgewählt aus mindestens einem der Monomere Styrol, $\alpha$-Methylstyrol und Methylmethacrylat; bevorzugte Monomere A.1.2 sind ausgewählt aus mindestens einem der Monomere Acrylnitril, Maleinsäureanhydrid und Methylmethacrylat.

Besonders bevorzugte Monomere sind A.1.1 Styrol und A.1.2 Acrylnitril.

Geeignete Pfropfgrundlagen A.2 sind beispielsweise Dienkautschüke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Geeignete Acrylatkautschuke gemäß A.2 sind vorzugsweise Polymerisate aus Acrylsäurealkylestern, gegebenenfalls mit bis zu 40 Gew.-%, bezogen auf A.2 anderen polymerisierbaren, ethylenisch ungesättigten Monomeren. Zu den bevorzugten polymerisierbaren Acrylsäureestern gehören $C_1-C_8$-Alkylester, beispielsweise Methyl-, Ethyl-, Butyl-, n-Octyl- und 2-Ethylhexylester; Halogenalkylester, vorzugsweise Halogen-$C_1-C_8$-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, Wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage A.2.

Bei cyclischen vernetzenden Monomeren mit mindestens drei ethylenisch ungesättigten Gruppen ist es vorteilhaft, deren Menge auf unter 1 Gew.-% bezogen auf die Pfropfgrundlage A.2 zu beschränken.

Bevorzugte "andere" polymerisierbare, ethylenisch ungesättigte Monomere, die neben den Acrylsäureestern gegebenenfalls zur Herstellung der Pfropfgrundlage A.2 dienen können, sind beispielsweise Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage A.2 sind Emulsionspolymerisate, die einen Gelgehalt von mindestens 60 Gew.-% aufweisen.

Weitere geeignete Pfropfgrundlagen gemäß A.2 sind Silikonkautschuke mit pfropfaktiven Stellen, wie sie in den DE-A 37 04 657, DE-A 37 04 655, DE-A 36 31 540 und DE-A 36 31 539 beschrieben werden.

Bevorzugte Pfropfgrundlagen A.2 sind Dienkautschuke (beispielsweise auf Basis Butadien, Isopren etc.) oder Gemische von Dienkautschuken sowie Copolymerisate von Dienkautschuken oder deren Gemischen mit weiteren copolymerisierbaren Monomeren (beispielsweise gemäß A.1.1 und A.1.2), mit der Maßgabe, dass die Glasübergangstemperatur der Komponente A.2 unterhalb <10°C, vorzugsweise <0°C, besonders bevorzugt <-10°C liegt. Besonders bevorzugt ist reiner Polybutadienkautschuk. Der Gelanteil der Pfropfgrundlage A.2 beträgt mindestens 30 Gew.-%, vorzugsweise mindestens 40 Gew.-% (in Toluol gemessen).

Der Gelgehalt der Pfropfgrundlage A.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die Pfropfgrundlage A.2 hat im allgemeinen eine mittlere Teilchengröße ($d_{50}$-Wert) von 0,05 bis 10 μm, vorzugsweise 0,1 bis 5 μm, besonders bevorzugt 0,2 bis 1 μm.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Pfropfpolymerisate werden durch radikalische Polymerisation, beispielsweise durch Emulsions-, Suspensions-, Lösungs- oder Massepolymerisation, vorzugsweise durch Emulsions- oder Suspensionspolymerisation hergestellt.

Als Emulgator in Emulsions- oder Suspensionspolymerisationen können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden. Auch Emulgatoren mit Carboxylgruppen (z.B. Salze von $C_{10}$-$C_{18}$-Fettsäuren, disproportionierte Abietinsäure, Emulgatoren gemäß DE-A 36 39 904 und DE-A 39 13 509) können prinzipiell eingesetzt werden.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf Gesamtmonomermenge in der Pfropfpolymerisationstufe). Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. $H_2O_2$, Di-tert.-Butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium- oder Kaliumpersulfat, Kaliumperphosphat, Natriumperborat sowie Redox-Systeme in Betracht.

Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist im allgemeinen 25°C bis 160°C, vorzugsweise 40°C bis 90°C. Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt mindestens 20°C beträgt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten A auch solche Produkte verstanden, die durch (Co)Polymerisation der Pfropfmonomere in Gegenwart der Pfropfgrundlage gewonnen werden und bei der Aufarbeitung mit anfallen.

Besonders bevorzugt kann das erfindungsgemäße Verfahren zur kontrollierten Herstellung von ABS durch Pfropfung von Polybutadien eingesetzt werden, wobei in einem Reaktor eine bekannte Menge Polybutadien $M_{PB}$ in Form einer Emulsion vorgelegt wird, eine Pfropfung zum Zeitpunkt t=0 gestartet wird, in bekannter Weise durch kontinuierliche Zugabe und Polymerisation der Monomeren Styrol und Acrylnitril durchgeführt wird und in kurzen zeitlichen Abständen die Raman-Spektren I(v) bevorzugt im Bereich 4000 bis 100 cm⁻¹ (Stokes-Bereich), ansonsten im Bereich - 4000 bis 4000 cm⁻¹ (Anti-Stokes- und Stokes-Bereich) aufgenommen werden. Im Gegensatz zur Lehre aus WO 00/49 395 wird Polybutadien erfindungsgemäß als innerer Standard bei der Raman-Spektrenauswertung verwendet.

Im Falle einer ABS-Pfropfreaktion ist der Spektralbereich 1550-1700 cm⁻¹ besonders interessant, da die beteiligten Komponenten hier charakteristische Raman-Peaks aufweisen:

| 1667 cm⁻¹: | 1,4 trans-Polybutadien | C=C-Valenzschwingung |
| 1654 cm⁻¹: | 1,4 cis-Polybutadien | C=C-Valenzschwingung |

(fortgesetzt)

| 1641 cm$^{-1}$: | 1,2 vinyl-Polybutadien/-Butadien | C=C-Valenzschwingung |
|---|---|---|
| 1632 cm$^{-1}$: | Styrol (Monomer) | C=C-Valenzschwingung |
| 1609 cm$^{-1}$: | Acrylnitril (Monomer) | C=C-Valenzschwingung |
| 1602 cm$^{-1}$: | Styrol/Polystyrol | Aromatenschwingung |
| 1583 cm$^{-1}$: | Polystyrol | Aromatenschwingung |

Beispielsweise kann bei der Butadien-Emulsionspolymerisation nach dem Verschwinden der Monomertröpfchen das Butadien/Polybutadien-Mengenverhältnis sehr genau On-line bestimmt werden. Bei bekannter zudosierter Butadienmenge ist damit auch der Umsatz bekannt.

Die Raman Spektroskopie ermöglicht es, im Falle der ABS-Pfropfreaktion bei bekannter Polybutadien-Konzentration die Konzentrationen der Monomeren Acrylnitril und Styrol, den Polymeranteil, die ABS-Copolymeranteile und den Umsatz Online zu erfassen.

Mit Hilfe des erfindungsgemäßen Verfahrens lassen sich Pfropfpolymere mit reproduzierbaren Eigenschaften herstellen, da durch Konstanthaltung der jeweiligen Monomerenverhältnisse für das Entstehen eines konstant zusammengesetzten Pfropfpolymers gesorgt wird. Gegebenenfalls kann mit Hilfe der vorliegenden Erfindung auch der Endpunkt der Reaktion erkannt werden.

Im folgenden wird die Erfindung durch Beispiele verdeutlicht.

**Ausführungsbeispiele:**

**Beispiel 1: Herstellung von ABS**

1.1 Polymerisation

| Fraktion A: | Polybutadienlatex mit 30% Feststoffgehalt mit einer Teilchengröße zwischen 200 und 400 nm | 21570 g |
|---|---|---|
| | Tensidlösung 7,5% in Wasser | 438.1 g |
| Fraktion B: | Kaliumpersulfat | 54.8 g |
| | Entionisiertes Wasser | 2190.5 g |
| Fraktion C: | Styrol technisch | 3105 g |
| | Acrylnitril technisch | 1495 g |
| | tert-Dodecylmercaptan | 16.6 g |
| Fraktion D: | Tensidlösung , 7,5% in Wasser | 1752.4 g |

Das Reaktionsgefäß einschließlich des Loops für die Probenmessung wird mit Stickstoff gespült. Anschließend wird die Fraktion A vorgelegt und nach Einschalten des Reaktors auf 62°C hochgeheizt. Sobald die Temperatur 62°C erreicht wird die Fraktion B innerhalb von 5 Minuten zugegeben. Danach werden die Fraktionen C und D in 6 Stunden zugegeben, wobei die Temperatur auf 62°C gehalten wird. Danach wird die Temperatur auf 70°C erhöht. Das Reaktionsgemisch verbleibt für 3 Stunden auf dieser Temperatur und wird anschließend auf 25° abgekühlt, der Reaktor geöffnet und das Produkt entnommen.

1.2 Analyse der Polymerisation

Die Raman-Spektrenaufnahme erfolgt mit einem RFS 100 FT-Raman-Spektrometer der Firma Bruker. Der darin enthaltene Nd:YAG-Laser wird mit einer Leistung von 1,2 Watt betrieben. Das Spektrometer ist mit einer Lichtleitergekoppelten Sonde ausgerüstet.

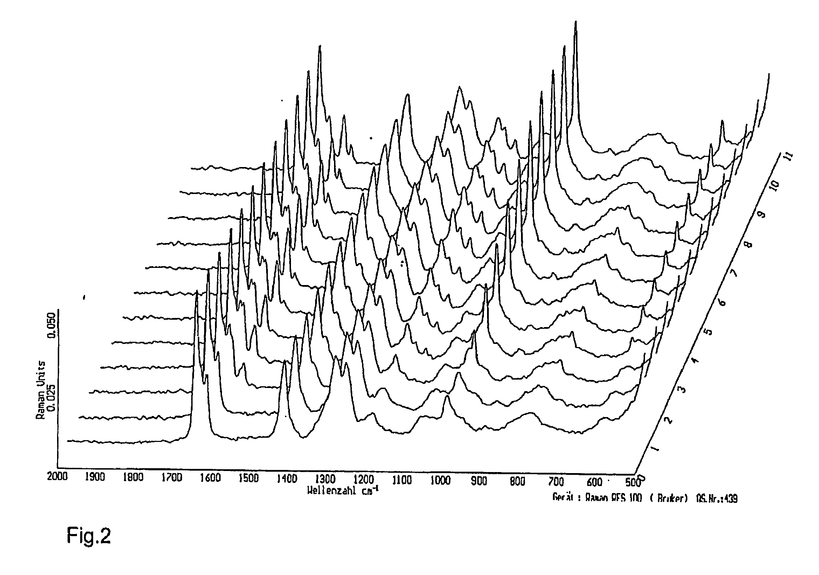

Die Raman-Spektren werden alle 5 Minuten mit einer Auflösung von 4 cm$^{-1}$ aufgezeichnet. Sie werden im Rechner gespeichert und nach der unten beschriebenen Methode analysiert. Fig. 2 gibt die erhaltenen Spektren wieder.

Aus den zuvor gemessenen und in digitalisierter Form in einer EDV-Einheit gespeicherten Raman-Spektren

$I_{PB}(\nu)$ von Polybutadien (PB), $I_{PS}(\nu)$ von Polystyrol (PS), $I_{PAN}(\nu)$ von Polyacrylnitril (PAN), $I_{STY}(\nu)$ von Styrol (STY) und $I_{ACN}(\nu)$ von Acrylnitril (ACN) und dem aktuellen Spektrum $I(\nu)$ des Reaktorinhaltes mit $\nu_{min}$=750 cm$^{-1}$ und $\nu_{max}$= 1800 cm$^{-1}$ werden aus der Bedingung:

$$\sum_{\nu_{min}}^{\nu_{max}} \{I(\nu) + [f_{PB}* I_{PB}(\nu) + f_{PS}* I_{PS}(\nu) + f_{PAN}* I_{PAN}(\nu) + f_{STY}* I_{STY}(\nu) + f_{ACN}* I_{ACN}(\nu) + f_k]\}^2$$

$$= \text{Minimum}$$

die Faktoren $f_i$, errechnet (gewichtete Subtraktion), wobei die Summation über alle Datenpunkte der in gleicher Form digitalisierten Spektren $I_i(\nu)$ erfolgt.

Daraus werden die Quotienten

$$Q_{PS} = f_{PS}/f_{PB}$$

$$Q_{PAN} = f_{PAN}/f_{PB}$$

$$Q_{STY} = f_{STY}/f_{PB}$$

$$Q_{ACN} = f_{ACN}/f_{PB}$$

und mit den Kalibrierfaktoren K die Mengenanteile W von:

- Polystyrol zu Polybutadien: $W_{PS} = K_{PS}* Q_{PS}$
- Polyacrylnitril zu Polybutadien: $W_{PAN} = K_{PAN}* Q_{PAN}$
- Styrol zu Polybutadien: $W_{STY} = K_{STY}* Q_{STY}$
- Acrylnitril zu Polybutadien: $W_{ACN} = K_{ACN}* Q_{ACN}$

berechnet und daraus mit:

- $M_{PS} = W_{PS} * M_{PB}$
- $M_{PAN} = W_{PAN} * M_{PB}$
- $M_{STY} = W_{STY} * M_{PB}$
- $M_{ACN} = W_{ACN} * M_{PB}$

die absoluten Mengen von Polystyrol $M_{PS}$, Polyacrylnitril $M_{PAN}$, Styrol $M_{STY}$ und Acrylnitril $M_{ACN}$ im Reaktor berechnet.

Dabei werden in einem Kalibrierschritt zuvor die Faktoren $K_{PS}$, $K_{PAN}$, $K_{STY}$ und $K_{ACN}$ bestimmt, indem die Raman Spektren $I_K(\nu)$ von Mischungen mit bekannten Mengenanteilen aufgenommen wurden, aus der Bedingung:

$$\begin{array}{c} \nu_{max} \\ \sum_{\nu_{min}} \{I_K(\nu) - [f_{PB}* I_{PB}(\nu) + f_{PS}* I_{PS}(\nu) + f_{PAN}* I_{PAN}(\nu) + f_{STY}* I_{STY}(\nu) + f_{ACN}* I_{ACN}(\nu) + f_k]\}^2 \end{array}$$

$$= Minimum$$

die Faktoren $f_i$, errechnet werden, daraus die Quotienten

$$Q_{PS} = f_{PS}/f_{PB}$$

$$Q_{PAN} = f_{PAN}/f_{PB}$$

$$Q_{STY} = f_{STY}/f_{PB}$$

$$Q_{ACN} = f_{ACN}/f_{PB},$$

mit den bekannten Mengen M die Gewichtsteile W:

$$W_{PS} = M_{PS}/M_{PB}$$

$$W_{PAN} = M_{PAN}/M_{PB}$$

$$W_{STY} = M_{STY}/M_{PB}$$

$$W_{ACN} = M_{ACN}/M_{PB}$$

und aus folgenden Gleichungen:

$$K_{PS} = W_{PS}/Q_{PS}$$

$$K_{PAN} = W_{PAN}/Q_{PAN}$$

$$K_{STY} = W_{STY}/Q_{STY}$$

$$K_{ACN} = W_{ACN}/Q_{ACN}$$

die Kalibrierfaktoren K berechnet werden.

1.3 Ergebnisse

Auf Basis der beschriebenen Kalibrierung erfolgt die Auswertung der Raman-Spektren, die während der Pfropfreaktion nach der Pfropfrezeptur aufgenommen werden. Ausgehend von der bekannten, vorlegten Menge von Polybutadien werden die Absolutmengen von Acrylnitril, Styrol, Polyacrylnitril und Polystyrol aus den Raman-Spektren bestimmt. Somit ist auch der Polymeranteil bekannt.

Der durch Off-line-Messung gravimetrisch bestimmte momentane Umsatz U bezogen auf die zudosierten Monomeren.

$$U = (W_{PS} + W_{PAN}) / (W_{PS} + W_{PAN} + W_{STY} + W_{ACN})$$

wird mit dem Raman-spektroskopisch bestimmten Umsatz verglichen. Es wird eine befriedigende Übereinstimmung gefunden.

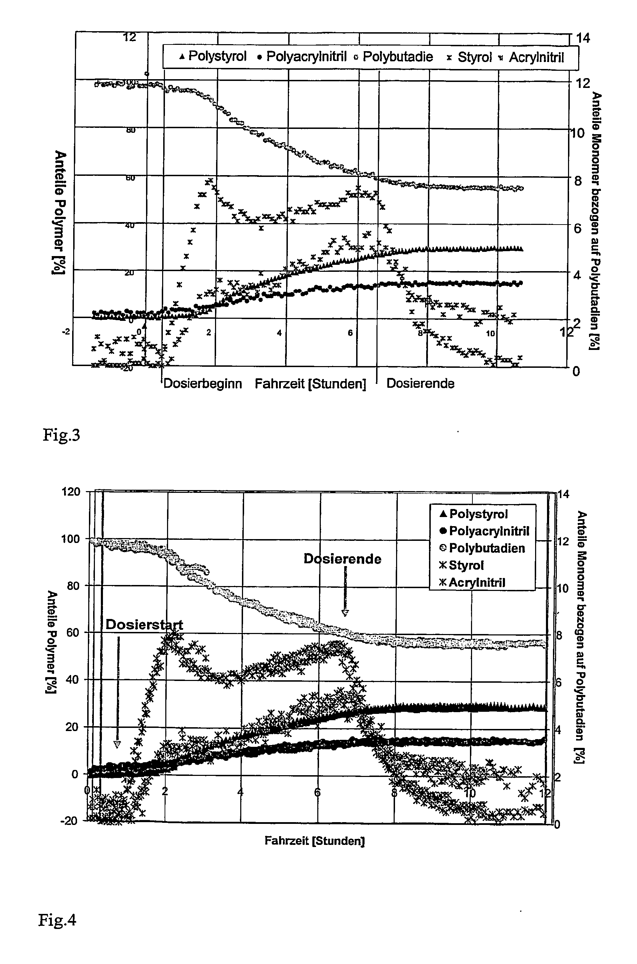

Man erhält präzise die Konzentration der Reagenzien ausgehend von den erhaltenen Raman-Spektren, wie in Fig. 3 dargestellt:

Abszisse: Fahrzeit, die um den Zeitversatz durch die Messung im Loop korrigiert ist.

linke Ordinate: Polymerkonzentrationen (Polybutadien, polymerisiertes Styrol im Poly(styrol-co-acrylnitril), polymerisiertes Acrylnitril im Poly(styrol-co-acrylnitril), die sich zu 100 Gew-% ergänzen;

rechte Ordinate: Monomerkonzentrationen (Styrol-Acrylnitril) bezogen auf die Masseneinwage von Polybutadien

**Beispiele 2 bis 4**

Es handelt sich dabei um exakte Reproduktionsversuche von Beispiel 1, die in gleicher Weise ausgewertet werden.

Die absoluten Mengen von Polystyrol $M_{PS}$, Polyacrylnitril $M_{PAN}$, Styrol $M_{STY}$ und Acrylnitril $M_{ACN}$ im Reaktor werden berechnet, diese mit den Soll-Mengen nach einer Zeit $\Delta t$ nach Start der Polymerisation verglichen und durch Variation der Zugabemengen von Styrol und Acrylnitril oder durch Anheben oder Absenken der Polymerisationsraten die aktuellen Mengen an die jeweiligen Soll-Mengen für die Reaktion zum Zeitpunkt $t_0 + \Delta t$ herangeführt.

In Fig. 4 sind die Ergebnisse aller vier Beispiele übereinander mit Markierungen zusammengestellt. Man erkennt, dass die Abweichungen sehr gering und die Streuung der Messergebnisse sehr klein ist.

**Patentansprüche**

1. Verfahren zur Bestimmung des Reaktionsfortschritts von Pfropfpolymerisationsreaktionen mittels kontinuierlicher Vor-Ort-Kontrolle der Reaktion durch Messung des Raman-Spektrums zu Beginn und in zeitlichen Abständen im Verlauf der Reaktion, **dadurch gekennzeichnet, dass** man vor Beginn der Reaktion das Raman-Spektrum eines oder mehrerer der zu analysierenden Monomeren und/oder Polymeren sowie mindestens eines inneren Standards im Wellenzahlenbereich von 100 bis 4000 cm$^{-1}$ aufnimmt, Reaktionspartner zur Durchführung der Pfropfpolymerisation kontinuierlich und/oder diskontinuierlich zugibt und in zeitlichen Abständen im Verlauf der Reaktion weitere Raman-Spektren im Wellenzahlenbereich von 100 bis 4000 cm$^{-1}$ aufnimmt und die Konzentrationsänderung der Monomeren und Polymeren durch Vergleich der Spektren der zu analysierenden Monomeren oder Polymeren relativ zum inneren Standard berechnet.

2. Verfahren nach Anspruch 1, **dadurch gekennzeichnet, dass** man eine Komponente mit signifikantem Raman-Signal vor Beginn einer absatzweisen Reaktion vollständig vorlegt und als internen Standard für die Raman-Spektrenauswertung verwendet.

3. Verfahren nach Anspruch 1, **dadurch gekennzeichnet, dass** man aus den gemessenen und gespeicherten Raman-Spektren der Monomere und der Polymere und dem aktuellen Spektrum im Verlauf der Reaktion durch gewichtete Subtraktion der Spektren der Monomere und der Polymere die absoluten Mengen der Monomere und der Polymere berechnet.

**4.** Verfahren nach Anspruch 3, **dadurch gekennzeichnet, dass** die berechneten absoluten Mengen der Monomere und der Polymere mit den Soll-Mengen nach einer Zeit $\Delta t$ nach Start der Polymerisation verglichen und durch Variation der Zugabemengen eines oder mehrerer Monomere oder durch Anheben oder Absenken der Polymerisationsraten die aktuellen Mengen an die jeweiligen Sollmengen für die Reaktion zum Zeitpunkt $t_0+\Delta t$ herangeführt.

**5.** Verfahren nach Anspruch 1 bis 4, **dadurch gekennzeichnet, dass** man die Raman-Spektren im Wellenzahlenbereich von 500 bis 2500 $cm^{-1}$ misst.

**6.** Verfahren nach Anspruch 1 bis 4, **dadurch gekennzeichnet, dass** man die Raman-Spektren im Wellenzahlenbereich von 750 bis 1800 $cm^{-1}$ misst.

**7.** Verfahren nach Anspruch 1, **dadurch gekennzeichnet, dass** man ein Gemisch enthaltend

> A.1 5 bis 95 Gew.-%, wenigstens eines Vinylmonomeren und
> A.2 95 bis 5 Gew.-% eine oder mehrere Pfropfgrundlagen mit Glasübergangstemperaturen <10°C

umsetzt.

**8.** Verfahren nach Anspruch 1, **dadurch gekennzeichnet, dass** man Monomere A.1 einsetzt, die Gemische aus

> A.1.1 50 bis 99 Gew.-Teilen mindestens eine Verbindung ausgewählt aus Styrol, $\alpha$-Methylstyrol, p-Methylstyrol, p-Chlorstyrol, Methacrylsäure-($C_1$-$C_8$)-Alkylester oder Mischungen hieraus und
> A.1.2 1 bis 50 Gew.-Teilen mindestens einer Verbindung ausgewählt aus Acrylnitril, Methacrylnitril, (Meth) Acrylsäure-($C_1$-$C_8$)-Alkylestern, Derivaten ungesättigter Carbonsäuren oder Mischungen hieraus sind.

**9.** Verfahren nach Anspruch 1, **dadurch gekennzeichnet, dass** man als Pfropfgrundlage A.2 Dienkautschuke, EP (D)M-Kautschuke, insbesondere auf Basis Ethylen/Propylen und gegebenenfalls Dien, Acrylat-, Polyurethan-, Silikon-, Chloropren und/oder Ethylen/Vinylacetat-Kautschuke einsetzt.

**10.** Verfahren nach Anspruch 5, **dadurch gekennzeichnet, dass** man die Reaktion durch Initiierung mit mindestens einem anorganischen oder organischen Peroxid startet

**11.** Verfahren nach Anspruch 5, **dadurch gekennzeichnet, dass** man die Reaktion durch Redox-Initiierung mit einem Initiatorsystem aus organischem Hydroperoxid und Ascorbinsäure startet.

**Claims**

**1.** Method for determining the reaction advancement of graft polymerisation reactions by means of continuous on-site checking of the reaction by measurement of the Raman spectrum at the start and at intervals of time in the course of the reaction, **characterised in that** before the start of the reaction the Raman spectrum of one or more of the monomers and/or polymers to be analysed together with at least one internal standard in the wave number range of 100 to 4000 $cm^{-1}$ is recorded, reaction partners for the carrying out of the graft polymerisation are added continuously and/or discontinuously, and at intervals of time in the course of the reaction further Raman spectra in the wave number range of 100 to 4000 $cm^{-1}$ are recorded and the change in concentration of the monomers and polymers is calculated by comparing the spectra of the monomers or polymers to be analysed relative to the internal standard.

**2.** Method according to claim 1, **characterised in that** a component with significant Raman signal is introduced fully prior to the start of a batchwise reaction and used as internal standard for the Raman spectrum analysis.

**3.** Method according to claim 1, **characterised in that** the absolute amounts of the monomers and the polymers are calculated from the measured and stored Raman spectra of the monomers and the polymers together with the current spectrum in the course of the reaction by weighted subtraction of the spectra of the monomers and the polymers.

4. Method according to claim 3, **characterised in that** the calculated absolute amounts of the polymers and the monomers are after a time $\Delta t$ after the start of polymerisation compared with the target concentrations, and by variation of the added amounts of one or more monomers or by raising or lowering of the polymerisation rates the current amounts are brought to the respective target amounts for the reaction at the time $t_0+\Delta t$.

5. Method according to claims 1 to 4, **characterised in that** the Raman spectra are measured in the wave number range of 500 to 2500 cm$^{-1}$.

6. Method according to claims 1 to 4, **characterised in that** the Raman spectra are measured in the wave number range of 750 to 1800 cm$^{-1}$.

7. Method according to claim 1, **characterised in that** a mixture containing

A.1 5 to 95 wt % of at least one vinyl monomer and
A.2 95 to 5 wt % of one or more graft bases with glass transition temperature < 10 °C

is converted.

8. Method according to claim 1, **characterised in that** monomers A.1 are used, which are mixtures of

A.1.1 50 to 99 parts by wt of at least one compound selected from styrene, $\alpha$-methyl styrene, p-methyl styrene, p-chlorostyrene, methacrylic acid-($C_1$-$C_8$) alkyl esters or mixtures thereof and
A.1.2 1 to 50 parts by wt of at least methyl one compound selected from acrylonitrile, methacrylonitrile, (meth) acrylic acid($C_1$-$C_8$) alkyl esters, derivatives of unsaturated carboxylic acids or mixtures thereof.

9. Method according to claim 1, **characterised in that** there are used as A.2 graft base diene rubbers, EP(D)M rubbers, in particular based on ethylene/propylene and optionally diene, acrylic, polyurethane, silicone, chloroprene and/or ethylene/vinyl acetate rubbers.

10. Method according to claim 5, **characterised in that** the reaction is started by initiation with at least one inorganic or organic peroxide.

11. Method according to claim 5, **characterised in that** the reaction is started by Redox initiation with an initiator system of organic hydroperoxide and ascorbic acid.

**Revendications**

1. Procédé de détermination de la progression de réactions de polymérisation greffée au moyen d'un contrôle in situ continu de la réaction grâce à la mesure du spectre de Raman au début et à certains intervalles dans le temps au cours de la réaction, **caractérisé en ce qu'**au début de la réaction, on inclut le spectre de Raman d'un ou plusieurs des monomères et/ou polymères à analyser ainsi qu'au moins un standard interne en nombre d'onde dans la gamme 100 à 4000 cm$^{-1}$, on ajoute en continu et/ou en discontinu des partenaires réactionnels pour la réalisation de la polymérisation greffée et on inclut à certains intervalles dans le temps au cours de la réaction d'autres spectres de Raman en nombre d'onde dans la gamme de 100 à 4000 cm$^{-1}$, et on calcule la modification de concentration des monomères et polymères en comparant les spectres des monomères ou polymères à analyser par rapport au standard interne.

2. Procédé selon la revendication 1, **caractérisé en ce qu'**on prépare entièrement un composant dont le signal de Raman est significatif au début d'une réaction par charges successives et on l'utilise comme standard interne pour l'analyse du spectre de Raman.

3. Procédé selon la revendication 1, **caractérisé en ce qu'**on calcule les quantités absolues de monomères et de polymères à partir des spectres de Raman, mesurés et enregistrés, des monomères et des polymères et du spectre actuel au cours de la réaction, par soustraction pondérée des spectres des monomères et des polymères.

**4.** Procédé selon la revendication 3, **caractérisé en ce qu'**on compare les quantités absolues calculées de monomères et de polymères aux quantités théoriques après un temps $\Delta t$ après le démarrage de la polymérisation et en faisant varier les quantités ajoutées d'un ou plusieurs monomères ou en rapprochant les quantité actuelles des quantités théoriques respectives pour la réaction à l'instant $t_0+\Delta t$ en augmentant ou en abaissant les taux de polymérisation.

**5.** Procédé selon les revendications 1 à 4, **caractérisé en ce qu'**on mesure les spectres de Raman en nombre d'onde dans la plage de 500 à 2500 cm$^{-1}$.

**6.** Procédé selon les revendications 1 à 4, **caractérisé en ce qu'**on mesure les spectres de Raman en nombre d'onde dans la plage de 750 à 1800 cm$^{-1}$.

**7.** Procédé selon la revendication 1, **caractérisé en ce qu'**on convertit un mélange contenant

   A.1 5 à 95 % en poids d'au moins un monomère vinylique et
   A.2 95 à 5 % en poids d'une ou plusieurs bases greffées à des températures de transition vitreuse < 10°C.

**8.** Procédé selon la revendication 1, **caractérisé en ce qu'**on utilise des monomères A.1 qui sont des mélanges constitués de

   A.1.1 50 à 99 parties en poids d'au moins un composé choisi parmi le styrène, l'$\alpha$-méthylstyrène, le p-méthyls-tyrène, le p-chlorostyrène, l'ester alkylique en $C_1$ à $C_8$ de l'acide méthacrylique ou des mélanges de ces substances et
   A.1.2 1 à 50 parties en poids d'au moins un composé choisi parmi l'acrylonitrile, le méthacrylonitrile, les esters alkyliques en $C_1$ à $C_8$ de l'acide (méth)acrylique, les dérivés d'acides carboxyliques insaturés ou des mélanges de ces substances.

**9.** Procédé selon la revendication 1, **caractérisé en ce qu'**on utilise, comme base greffée A.2 des caoutchoucs diènes, des caoutchoucs EP(D)M, en particulier à base d'éthylène/propylène et, le cas échéant, un diène, des caoutchoucs acrylate, polyuréthane, silicone, chloroprène et/ou éthylène/acétate de vinyle.

**10.** Procédé selon la revendication 5, **caractérisé en ce qu'**on fait démarrer la réaction en l'amorçant avec au moins un peroxyde inorganique ou organique.

**11.** Procédé selon la revendication 5, **caractérisé en ce qu'**on fait démarrer la réaction par un amorçage redox avec un système amorceur constitué d'hydroperoxyde et d'acide ascorbique.

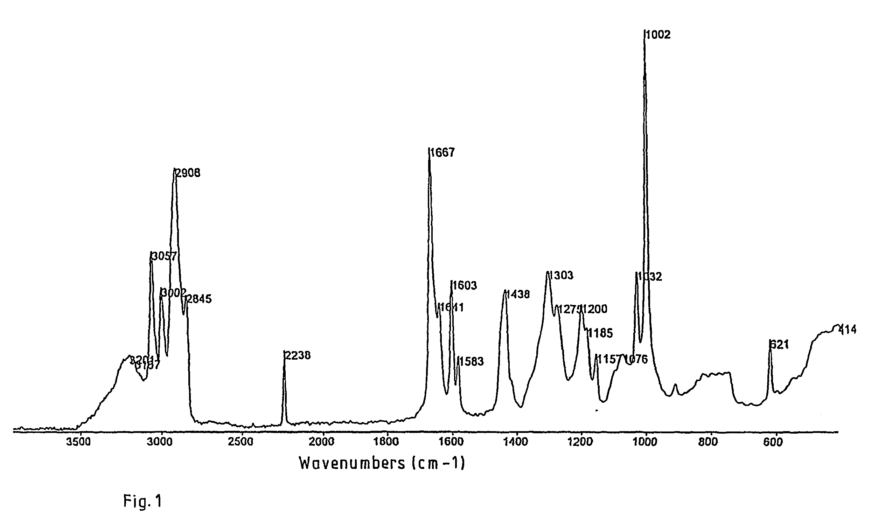

Fig. 1

Fig.2

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4125534 A
- WO 9808066 A
- WO 0109201 A
- US 6072576 A
- US 4661383 A
- WO 0049395 A
- DE 3704657 A
- DE 3704655 A
- DE 3631540 A
- DE 3631539 A
- DE 3639904 A
- DE 3913509 A

**In der Beschreibung aufgeführte Nicht-Patentliteratur**

- **AUCH M. VAN DEN BRINK.** *Journal of Applied Polymer Science,* 2001, vol. 79, 426-436
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-1796
- **HOUBEN-WEYL.** Methoden der Organischen Chemie. vol. 14/1, 263-297